# EUROPEAN PATENT APPLICATION

(11) **EP 1 715 654 A1**
(43) Date of publication of application: **25.10.2006**
(21) Application number: 05008909.3
(22) Date of filing: 22.04.2005
(51) Int. Cl.: H04L 29/08

(54) **Communication network performing service functions**

(71) Applicant: CREATE-NET, 38100 Trento (IT)
(72) Inventor: Carreras, Iacopo, 56017 Pisa (IT); Clamtac, Imrich, Richardson TX 75080 (US); De Pellegrini, Francesco, 35129 Padova (IT); Kiraly, Csaba, Povo (TN) (IT); Miorandi, Daniele, 38014 Gardolo (TN) (IT); Mandato, Davide, 38100 Trento (IT)
(74) Representative: Weinmiller, Jürgen

(57) **Abstract**

This invention relates to a communication network composed of a plurality of intercommunicating nodes performing similar service functions.

According to the invention at least some nodes (1) comprise
- means (8, 8') for elaborating quality indexes of their actual service performance,
- means (5, 5') for transmitting these indexes and service representations or parts thereof to near-by nodes,
- means (5, 5') for receiving corresponding indexes and service representations or parts thereof from near-by nodes,
- means (4, 4') for executing a mating process by comparing transmitted and received indexes and by producing the new service representation based on the local and the received service representation,
- means (2, 2'; 3, 3') for storing the service representation, executing it and changing it dynamically based on input from the means (4, 4') for comparing and producing service representations.

## Description

This invention refers to a communication network composed of a plurity of intercommunicating stations each performing a service function. In particular it relates to the fields of distributed data processing, wired or wireless communication networks, mobile communication networks, ad-hoc networks, sensor networks, pervasive and evolutionary computing systems.

As the trend toward ubiquitous and pervasive computing continues to gain momentum, the number of nodes is expected to grow by multiple orders of magnitude as tags, sensors, and a myriad of other miniatured devices get fully integrated into larger communication networks. The Internet itself is going to explode due to the tremendous amount of information exchanged among a massively large number of devices.

Not only the amount of information in these all-embracing pervasive environments will be enormous and to a large degree localized, but also the ambience within which these nodes will act will be intelligent, mobile, self-cognitive, knowledge based and "almost alive".

This problem does not concern only the communication aspect, i.e. the ability of the network to carry information, but also the way in which the network is managed and administrated.

New paradigms (for communication, computing and service provisioning) are needed to face the needs and features of this networking environment (see J.M.Kahn, R.H.Katz, K.S.J. Pister "Next Century Challenges: Mobile Networking for "Smart Dust", Proc. of ACM Mobicom, Seattle 1999). The classical end-to-end communication paradigm is not suited for supporting the need for exchanging the tremendous amount of (to a large extent) localised information.

In particular, autonomic communication systems are expected to represent one of the major technological breakthroughs in the next decades, enabling the introduction of novel services and leading to a deep change in the way of interaction with modem technologies. The term "autonomic" comes from the computing field (J.O.Kephart and D.M.Chess "The Vision of Autonomic Computing" IEEE Comp.Mag.36 (2003) p.41-50), where it is used to define systems which are inherently self-configuring, self-healing and self-protecting. Moving to the communication field, a system able to exhibit such features would clearly allow solving the scalability and management issues related to the deployment of large-scale networks.

Of particular interest are the issues of defining a network architecture able to show a scale-free behaviour and of designing services (i.e. user-located modular programs, which exploit local communication capabilities in order to perform certain tasks or actions) that are able to exploit the peculiar features of such an architecture in order to evolve, which lead, on the whole, to a complete autonomic communication network architecture.

A nomadic wireless network infrastructure model is known (I.Carreras, I.Chlamtac, H.Woesner, H.Zang "Nomadic Sensor networks", Proc. of EWSN, Istanbul, Turkey 2005) and the exploitation of the user mobility for achieving network scalability is disclosed in "Mobility Increases the Capacity of Ad-Hoc Wireless Networks" by M.Grossglauser and D.Tse (IEEE/ACM Trans. on Netw.10 (2002), p.477-486). The problem of obtaining autonomic services over such a backbone-less networking infrastructure has been discussed in a paper "BIONETS: BIO-inspired NExt gemeraTion networks" by I.Carreras, I. Chlamtac, H.Woesner and C.Kiraly, published in Proc.of WAC, Berlin 2004, by borrowing notions and drawing inspirations from the biological concept of evolution. However this concept is different from the concept used in traditional evolutionary methods. Genetic algorithms (see J.H.Holland "Adaption in Natural and Artificial Systems" University of Migigan Press, Ann Arbor 1975; or L.J.Fogel, A.J.Owens, M.J.Walsh "Artificial Intelligence Through Simulated Evolution" John Wiley, Chichester, UK, 1966) or genetic programming" (see J.R.Koza "Genetic Programming" MIT Press, Cambridge, MA 1992, or J.R.Koza "Genetic Programming-2" MIT Press, Cambridge,MA 1994) are not suited to solve the aforementioned problems, since those are algorithms designed to operate off-line in a centralized manner, to compute an optimization task over a population of candidate solutions. Furthermore, the aim of traditional evolutionary computing methods, like genetic algorithms or genetic programming, is to find a single solution yielding the optimum result, whereas the problem considered here requires that all of the instances of the population promptly converge to the optimum result in a distributed fashion, via on-the-fly computation.

Contrary to the prior art solutions as referred to above, the present invention proposes a network solution which is able to adapt its behaviour and data to the surrounding environment. The environment can include the space/time location of the user, the state of the entire system, the user requirement etc. The challenge is to achieve service evolution over such infrastructure-less network.

The solution as defined in the main claim here-below is based on a one-to-one mapping from biology to a communication network in which the population (i.e. the instances of the service running on different users) evolves through mating (i.e. the exchanges of code/parameters between neighboring nodes made possible by the adoption of a wired or wireless network interface), the mating process being driven by the ability of the service to fit the actual environmental features.

In this way the "survival of the fittest" paradigm is applied according to the present invention, to achieve adapation by evolution. The result is a service which is able to adapt to the actual environment, needs or requirements without the need of any human intervention nor of a central controller.

In the frame of the invention the service installed in one of the nodes evolves by exchanging information with a peer service installed and running on another communication node whenever any two such nodes connect to each other. The selection of the service to change as a result of this interaction is based on a service performance measurement. The service yielding the lowest index will be changed by incorporating some of the features and/or data of the node that yields the highest index.

The selection of features and/or data to be changed is driven by the mating process, of which several embodiments are possible:

One possible embodiment of the mating process starts with the mutual exchange of fitness indexes between two nodes. In both nodes the value belonging to the local service representation is compared with the received fitness value. The service in the less fit node is then changed by cloning the one achieving the highest fitness, and then by applying a random mutation (i.e. alteration of service data elements and/or service features) on the clone (so-called clone-and-mutate policy).

In another embodiment of the mating process, the service representation yielding a lower fitness value is changed by applying not all but only some of the features (behaviour) and/or data elements of the peer device that yields the best fitness. The selection of said service features and/or service data elements is carried our without human interaction by randomly extracting a subset of said service features and/or service data elements from the peer service that yields the best fitness, and substituting the corresponding subset in the service being changed. Afterwards, a random mutation (i.e. alteration of service data elements and/or service features) on the resulting service is carried out (so-called combine-and-mutate policy).

As a further option for implementing the mating process, both the fit (the one yielding the higher fitness value) and the unfit (the one yielding the lower fitness value) services can change according to any of the policies mentioned above.

As a still further option for implementing the mating process, the service can be changed only with respect to the data elements it works with, leaving behavioural service elements fixed (pure data evolution).

As a still further option for implementing the mating process, the service can be changed only with respect to the the features it is composed of, leaving data elements out of the mating process (pure behavioural evolution).

A practical example for application of the present invention concerns the mating process between two nodes of a GPS-based autonomic navigation system.

The GPS (Global Positioning System) is used quite extensively to support navigation applications allowing to determine the shortest route to a destination. Since the database is stored in the memory of a computer hosted onboard, the road-map data collection is fixed and does not change over time. But in reality the users are interested in the quickest path rather than the shortest one, so that such a navigation system is actually working with a suboptimal metric. Such a case cannot be handled by a central controller due to obvious scalabilty and management problems.

The service is implemented in a distributed way enhanced with automatic features where user mobility is exploited to derive the algorithm yielding the best metric, and to diffuse this algorithm among drivers.

In particular, if one identifies the "service" as the algorithm used to compute the route (towards a specified destination), one can apply the method of autonomic services according to the invention over a nomadic wireless network to present a service that could not be delivered to users in a centralized way, by letting the service (i.e. the route computation algorithm) evolve based on a success metric considering arrival time instead of the path length. The cost to pay for this enhanced service lies in the introduction of car-to-car communications, but it is expected that the benefits for the end-user may be much higher than the cost involved.

This example shows that there exist cases of practical interest where the service could not be managed centrally and the autonomic paradigm is likely to represent the only viable solution. Generally speaking, the focus of the present invention is directed to evolutionary paradigms for services which evolve (i.e. achieve better performance) by exchanging (i.e. mating) data, codes or parameters with other services.

The general structure necessary for such an improvement will now be explained with reference to the drawings showing two individual communication nodes 1 and 1' which are able to communicate with each other. Each node contains a unit 2 or 2' containing modules of data, codes or parameters for implementing an actual service referred to as service representation. It determines the service behavior as it is executed by a service execution unit 3 or 3'. At the time of mating, the memory unit storing the service representation unit 2, 2' is used by a mating unit 4, 4' and changed during the mating process to reflect the new representation. The mating unit 4, 4' of each node 1, 1' executes the mating process based both on local information sources (concerning the fitness index of the currently running service supplied by a fitness calculation unit 8 or 8' and the actual service representation supplied by the service representation unit 2 or 2') and the fitness index and service representation of a peer communication node 1' or 1 respectively. The mating process could also take input from the optional user profiling unit 9 or 9' which builds the user profile on the basis of monitoring service execution. The nodes communicate via transmit/receive units 5, 5' according to a service exchange protocol which defines the process of exchanging fitness values and service representations between communication nodes during a mating process.

The service execution by the service execution unit 3 or 3' is based on the actual service representation code supplied by the unit 2 or 2' and on information from the environment supplied along an arrow 7 or 7' according to the service needs. The service execution unit 3 or 3' executes the service code and provides output to the user (horizontal arrow 6 or 6').

The invention is not restricted to the embodiment described above or to its use in an improved GPS-based car guiding system. The nodes may be mobile or stationary and the number of nodes in instant mutual communication may by higher than 2. The definition of the fitness needs not be unidimensional such that two nodes can both evolve, each one according to another criterion. Moreover there may be a need to take into account user specific information in the fitness calculation. To this end a user interaction input 10, 10' allows the user to communicate with the service execution unit 3, 3' which then transmits instructions to the unit 9 or 9'.

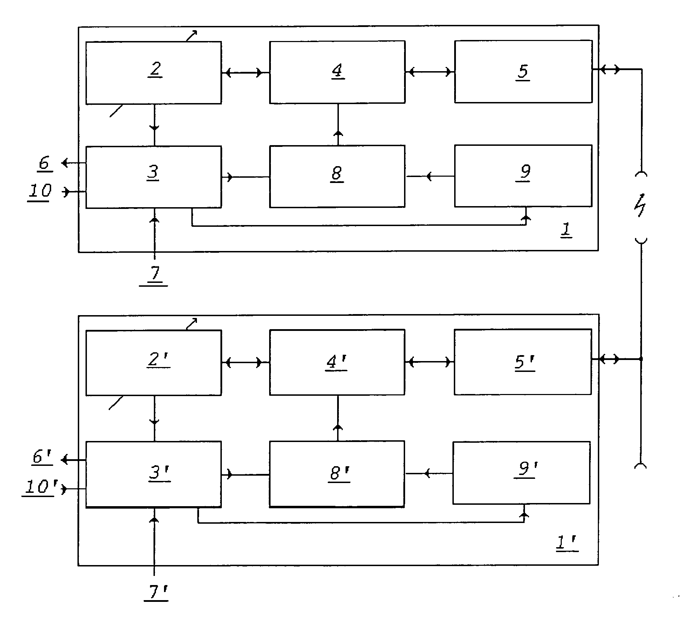

## Claims

1. Communication network composed of a plurality of intercommunicating nodes performing similar service functions, **characterized in that** at least some nodes (1) comprise
- means (8, 8') for elaborating quality indexes of their actual service performance,
- means (5, 5') for transmitting these indexes and service representations or parts thereof to near-by nodes,
- means (5, 5') for receiving corresponding indexes and service representations or parts thereof from near-by nodes,
- means (4, 4') for executing a mating process by comparing transmitted and received indexes and by producing the new service representation based on the local and the received service representation,
- means (2, 2'; 3, 3') for storing the service representation, executing it and changing it dynamically based on input from the means (4, 4') for comparing and producing service representations.

2. Communication network according to claim 1, **characterized in that** the means (8, 8') for elaborating quality indexes in a node take into account also environmental informations (7, 7').

3. Communication network according to one of the preceding claims, **characterized in that** the means (8, 8') for elaborating quality indexes in a node take into account also user profile informations stored in a user profile unit (9, 9').

4. Communication network according to any one of the preceding claims, **characterized in that** the means (4, 4') for executing a mating process by comparing transmitted and received indexes and the means (2, 2') for producing the new service representation perform this production by randomly selecting a subset of the service representation yielding the higher fitness index and substituting this subset in the other service representation.

5. Communication network according to anyone of the preceding claims, **characterized in that** the mating means (4, 4') are conceived to apply a clone-and-mutate policy.

6. Communication network according to anyone of claims 1 to 4, **characterized in that** the mating means (4, 4') are conceived to apply a combine-and-mutate policy.

7. Communication network according to anyone of claims 1 to 4, **characterized in that** the mating means (4, 4') are conceived to apply a pure data evolution policy.

8. Communication network according to anyone of claims 1 to 4, **characterized in that** the mating means (4, 4') are conceived to apply a pure behavioural evolution policy.
